# EUROPÄISCHE PATENTSCHRIFT

(11) **EP 0 496 962 B1**
(45) Veröffentlichungstag und Bekanntmachung des Hinweises auf die Patenterteilung: **29.03.1995**
(21) Anmeldenummer: 91119406.6
(22) Anmeldetag: 14.11.1991
(51) Int. Cl.: B01L 3/02, B01L 7/00

(54) **Pipettierröhrchen mit regelbaren Heizungen**
Pipettes with controlled heatings
Pipettes avec chauffages régulés

(30) Priorität: 26.01.1991 DE 9111441 U
(43) Veröffentlichungstag der Anmeldung: 05.08.1992
(73) Patentinhaber: BEHRINGWERKE Aktiengesellschaft, 35001 Marburg (DE)
(72) Erfinder: Geiss, Manfred Dipl.Ing. Dr., D-6302 Lich (DE); Heide, Wolfgang Dipl. Phys., D-6100 Darmstadt (DE); Wittekind, Jürgen Dipl. Ing., D-6000 Frankfurt am Main (DE); Breetz, Michael Dipl. Ing., D-6057 Dietzenbach/Steinberg (DE)
(74) Vertreter: Schubert, Siegmar, Dipl.-Ing.

(56) Entgegenhaltungen:
- EP-A- 0 192 957
- WO-A-83/02006
- DE-A- 3 838 626
- DE-A- 3 921 393
- FR-A- 2 277 341
- PATENT ABSTRACTS OF JAPAN vol. 12, no. 494 (P-805)23. Dezember 1988
- PATENT ABSTRACTS OF JAPAN vol. 9, no. 210 (P-383)28. August 1985

## Beschreibung

Die Erfindung betrifft ein heizbares Pipettierröhrchen mit einer geregelten elektrischen Heizung.

Ein derartiges Pipettierröhrchen beschreibt beispielsweise die deutsche Patentschrift 26 26 332. Die regelbare Heizung erstreckt sich dort über das eigentliche Pipettier-röhrchen und läßt dessen Spitze frei. Diese Konstruktion bringt aber Nachteile mit sich, wenn man unterschiedliche Volumina pipettieren und temperieren will, ohne daß die Pipettierflüssigkeit dabei zu hoch temperiert wird: legt man die Heizung und die Regelung auf die Temperierung größerer Volumina aus, so besteht die Gefahr, daß kleinere Volumina überhitzt werden.

Zwar ist dort eine weitere geregelte Heizung vorgesehen, und zwar für eine Zentrifuge, in die das Pipettierröhrchen eingesetzt wird, jedoch kann man auch mit dieser zweiten, einer Vortemperierung dienenden Regelung das Problem nicht lösen, unterschiedliche Volumina an Pipettierflüssigkeit schnell auf die gewünschte Temperatur zu temperieren, ohne diese zu hoch zu erhitzen.

Die EP-O 192 957-B1 beschreibt ein Analysegerät mit einem Schlitten, der über eine Pipette Flüssigkeitsproben von einem Drehteller zu einer temperierten Küvette transportiert. Der Schlitten ist mit einer steuerbaren Heizeinrichtung ausgerüstet. Diese Temperatursteuerung soll die Probenflüssigkeit auf die Temperatur der Küvette vortemperieren.

Zum Stand der Technik wird auch hingewiesen auf die deutsche Offenlegungsschrift 38 38 626, bei der ein Pipettierröhrchen durch elektrisch beheiztes Wasser erwärmt wird. Diese Heizung arbeitet aber sehr träge, insbesondere weil der Wasservorrat mitsamt denjenigen Bauteilen zunächst auf die gewünschte Temperatur beheizt werden muß, mit denen das Heizwasser in Berührung kommt.

Die Druckschrift "Patent Abstract of Japan", Volume 12, Nr. 494 vom 23.12.1988 beschreibt ein heizbares Pipettierröhrchen mit einer geregelten elektrischen Heizung, wobei das Pipettierröhrchen in zwei Zonen unterteilt ist, nämlich in eine erste Zone im Bereich der Pipettierspitze und in eine sich daran anschließende zweite Zone, und wobei beide Zonen voneinander getrennte Heizungen mit eigenen Reglern zugeordnet sind. Das Pipettierröhrchen wird dort in der ersten Zone schnell aufgeheizt und in der zweiten Zone thermostatisch auf einer konstanten Temperatur gehalten. Außerdem ist hier der Heizdraht beabstandet von der Wicklung des Pipettierröhrchens der ersten Zone angeordnet. Eine schnelle Temperierung des in der ersten Zone befindlichen Mediums ist hier also nicht möglich und insbesondere dann nicht , wenn das Pipettierröhrchen der ersten Zone nur teilweise mit dem betreffenden Medium gefüllt ist. In diesem Fall wird nämlich der nicht mit dem Medium gefüllte Teil des Röhrchens stärker erwärmt als der mit dem Medium gefüllte Teil und dies kann zu einer lokalen Überhitzung des Mediums führen.

Die WO 83/02006 beschreibt einen Chromatographen mit einem Röhrchen, dessen Temperatur über mehrere Heizvorrichtungen schnell und präzise eingestellt werden kann.

Demgegenüber liegt der Erfindung die Aufgabe zugrunde, ein heizbares Pipettierröhrchen vorzuschlagen, mit dem auch unterschiedliche Volumina sehr schnell auf die richtige, gewünschte Temperatur gebracht werden können.

Zur Lösung dieser Aufgabe ist das erfindungsgemäße Pipettierröhrchen gekennzeichnet durch die folgenden Merkmale:
- das Pipettierröhrchen ist in zwei Zonen unterteilt, nämlich in eine erste Zone im Bereich der Pipettierspitze und in eine sich daran anschließende zweite Zone,
- die zweite Zone hat ein größeres Volumen als die erste Zone,
- jede der Zonen hat eine eigene Heizung mit eigenem Regler,
- der Regler der der ersten Zone zugeordneten Heizung arbeitet mit einer starken Stellgrößenänderung und der Regler der zweiten Zone mit geringer Stellgrößenänderung,
- die elektrische Heizung der ersten Zone ist als PTC-Heizung ausgebildet und
- die Heizung der ersten Zone liegt direkt an dem Pipettierröhrchen der ersten Zone an.

Soll somit ein kleines Volumen pipettiert werden, so wird dieses in der ersten Zone entsprechend schnell auf die gewünschte Temperatur erwärmt. Diese zeichnet sich somit durch eine kleine Wärmekapazität aus. Soll ein größeres Volumen pipettiert und temperiert werden, so saugt man die Pipettierflüssigkeit bis in die zweite, darüber befindliche Zone an, wobei dann die erste Zone als Vortemperierung für die zweite Zone wirkt. In der zweiten Zone sind daher zwar größere Volumina zu temperieren, diese kommen dort, bedingt durch die Vortemperierung in der ersten Zone, aber mit verhältnismäßig geringen Temperaturdifferenzen von wenigen Grad an. Die Regelung der zweiten Zone ist daher träge und zeichnet sich durch geringere Temperaturschwankungen und durch eine größere Wärmeübertragungsfläche aus, um die größeren Volumina in kurzer Zeit temperieren zu können.

Die elektrische Heizung der ersten Zone ist erfindungsgemäß als PTC-Heizung ausgebildet. Diese ist bekanntlich dadurch charakterisiert, daß der Widerstand des Heizdrahts mit steigender Temperatur stark ansteigt. Wird also das Röhrchen in der ersten Zone nur teilweise mit der Pipettierflüssigkeit gefüllt, so erwärmt sich der PTC-Widerstandsdraht im nicht befüllten Teil stärker, wodurch sich sein elektrischer Widerstand sehr stark erhöht, so daß dieser Teil, der nicht mit der Flüssigkeit in Kontakt kommt, nicht so stark erwärmt. Insgesamt wird durch diese Maßnahmen also eine sehr gleichmäßige Temperierung erreicht, und zwar unabhängig vom Füllzustand des Röhrchens in der ersten Zone.

Es empfiehlt sich, das Röhrchen in der ersten Zone gerade verlaufen zulassen und in der zweiten Zone gewunden, beispielsweise spiralförmig oder mäanderförmig. Dadurch erreicht man in der ersten Zone die angestrebte kleine Wärmekapazität und in der zweiten Zone die angestrebte große Wärmekapazität.

Es dient demselben Zweck, wenn das Röhrchen im Bereich der zweiten Zone an einem gut wärmeleitenden Wärmeträger anliegt, beispielsweise an einem Metallblock, wobei das Röhrchen auch in einem entsprechend geformten, vertieften Bett verlegt sein kann.

Für den Regler der zweiten Zone wird man einen Temperaturfühler am Eingang der zweiten Zone vorsehen, damit die erste Temperatur eingangsseitig gemessen wird.

Zusätzlich kann man einen derartigen Temperaturfühler auch am Ausgang der zweiten Zone anbringen, und zwar wenn das Pipettierröhrchen, beispielsweise zu Reinigungszwecken, in umgekehrter Richtung von einer Flüssigkeit durchströmt wird. Aus diesem Grunde wurde vorstehend und nachfolgend auch nicht von einer unteren bzw. oberen Pipettierzone gesprochen, sondern von einer ersten und zweiten Pipettierzone. Im allgemeinen wird die Pipettierflüssigkeit durch die Spitze zur ersten, unteren Zone angesaugt und gelangt dann, wenn ein entsprechendes Volumen vorhanden ist, in die zweite, obere Zone des Pipettierröhrchens.

Bevorzugt ist eine Ausführungsform, bei der in der zweiten Zone Temperaturfühler und Heizelement identisch sind.

Die Solltemperatur in der zweiten Zone kann etwas niedriger sein, bevorzugterweise zwischen 0,5 und 5°K niedriger, als in der ersten Zone.

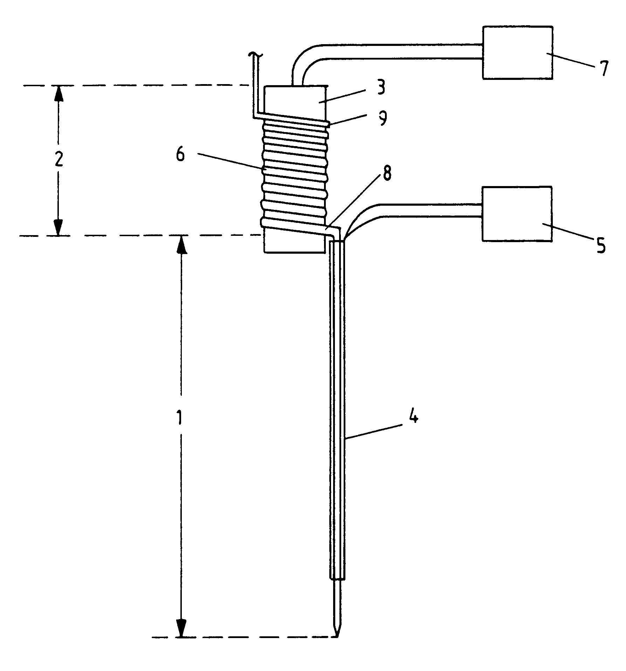

Die Erfindung wird im folgenden anhand eines Ausführungsbeispiels näher erläutert, aus dem sich weitere wichtige Merkmale ergeben. Die Figur zeigt schematisch ein erfindungsgemäßes Pipettierröhrchen.

Das gezeigte Pipettierröhrchen besteht aus einem unteren Bereich 1 und einem sich daran anschließenden oberen Bereich 2. Im unteren Bereich befindet sich die Pipettierspitze und der unteren Bereich ist durch ein gerade verlaufendes Röhrchen gekennzeichnet.

Das Röhrchen verläuft im oberen Bereich 2 spiralförmig gewunden oder auch in anderen Windungen. Das Röhrchen liegt dort an einem Körper 3 aus gut wärmeleitenden Material an, wodurch die Wärmekapazität erhöht wird.

Zumindest die größte Länge des unteren Bereichs 1 wird mit Hilfe einer ersten elektrischen Heizung 4 beheizt, der ein Regler 5 zugeordnet ist. Entsprechend wird der obere Bereich 2 des Röhrchens ebenfalls mit Hilfe einer bei Pos. 6 angedeuteten, zweiten elektrischen Heizung 6 beheizt, der ein Regler 7 zugeordnet ist.

Die Gesamtlänge 1, 2 des Röhrchens wird somit über zwei getrennte Heizungen 4, 6 beheizt, wobei zwei unterschiedliche Regler 5, 7 mit unterschiedlichen Regelcharakteristiken verwendet werden. Der Regler 5 arbeitet mit einer starken Stellgrößenänderung und der Regler 7 mit einer geringeren Stellgrößenänderung. Die erste Heizung 4 beheizt den geraden Teil des Röhrchens bis beispielsweise etwa 15 mm vor der Spitze. Die zweite Heizung 6 beheizt einen Aluminiumzylinder (Körper 3) mit großer Wärmekapazität. Um den Zylinder ist der von der Länge her größte Teil des Röhrchens aufgewickelt.

Die Regelschaltung 5 der unteren Heizung 4 regelt die Stellgröße verzögerungsfrei. Das bedeutet, daß große Schwankungen der Sollgröße sehr schnell ausgeregelt werden. Wird kalte Flüssigkeit aufgenommen, sowird diese schon beim Durchlaufen des unteren Röhrchenteils (Bereich 1) bis nahe an die gewünschte Temperatur aufgeheizt. Gelangt sie nun in den oberen Röhrchenteil 2, der durch die obere Heizung 6 temperiert wird, so gleicht sich die Temperatur aufgrund der geringen Wärmekapazität der Flüssigkeit im Vergleich zum Aluminiumzylinder 3 und bedingt durch die nur noch geringe Temperaturdifferenz schnell und ohne große Schwankungen an die Temperatur des Zylinders an. Dadurch ergibt sich eine Regelschaltung mit sehr geringer Stellgrößenänderung.

Der Vorteil der beschriebenen Regelung ist eine sehr geringe Schwankung der Temperatur um den Sollwert. Der Nachteil einer längeren Ausregelzeit für starke Schwankungen der Sollgröße kommt dadurch nicht zum Tragen.

Versuche haben gezeigt, daß mit dem erfindungsgemäßen Pipettierröhrchen Pipettierflüssigkeiten von beispielsweise 20 »l bis 600 »l pipettiert werden können, wobei die unterschiedlichen Bereiche 1, 2 des Röhrchens benutzt wurden. Dabei wurde die Pipettierflüssigkeit innerhalb weniger Sekunden auf 37,3 +/- 0,3°C aufgewärmt. Die Wandtemperatur des Röhrchens durfte dabei eine Temperatur von 41°C nicht überschreiten, um eine Beschädigung der Pipettierflüssigkeit zu vermeiden.

Die Figur zeigt auch, daß eingangsseitig der zweiten Zone ein Temperaturfühler 8 angeordnet ist. Ggfs. ist auch ausgangsseitig der ersten Zone 2 ein weiterer Temperaturfühler 9 vorgesehen. Die Temperaturfühler 8, 9 sind Teil des Regelkreises des Reglers 7.

Bei einem Ausführungsbeispiel hatte der untere Bereich 1 ein Volumen von 100 »l und der obere Bereich 2 ein Volumen von 500 »l. Es sind aber auch andere Volumenverhältnisse als 1 : 5 möglich, solange das Volumen des unteren Bereichs kleiner ist als dasjenige des oberen Bereichs.

## Patentansprüche

1. Heizbares Pipettierröhrchen, gekennzeichnet durch die folgenden Merkmale:
- das Pipettierröhrchen ist in zwei Zonen unterteilt, nämlich in eine erste Zone (1) im Bereich der Pipettierspitze und in eine sich daran anschließende zweite Zone (2),
- die zweite Zone (2) hat ein größeres Volumen als die erste Zone (1),
- jede der Zonen (1, 2) hat eine eigene Heizung (4, 6) mit eigenem Regler (5, 7),
- der Regler (5) der der ersten Zone (1) zugeordneten Heizung (4) arbeitet mit einer starken Stellgrößenänderung und der Regler (7) der zweiten Zone (2) mit geringer Stellgrößenänderung,
- die elektrische Heizung (4) der ersten Zone (1) ist als PTC-Heizung ausgebildet und
- die Heizung (4) der ersten Zone (1) liegt direkt an dem Pipettierröhrchen der ersten Zone (1) an.

2. Pipettierröhrchen nach Anspruch 1,
**dadurch gekennzeichnet,**
daß das Röhrchen in der ersten Zone (1) gerade verläuft und in der zweiten Zone (2) gewunden.

3. Pipettierröhrchen nach Anspruch 1 oder 2,
**dadurch gekennzeichnet,**
daß das Röhrchen im Bereich der zweiten Zone (2) an einem gut wärmeleitendem Wärmeträger (3) anliegt.

4. Pipettierröhrchen nach einem der Ansprüche 1 bis 3,
**dadurch gekennzeichnet,**
daß ein Temperaturfühler (8) an der zur ersten Zone (1) weisenden Seite des Röhrchens der zweiten Zone (2) angeordnet ist.

5. Pipettierröhrchen nach Anspruch 4,
**dadurch gekennzeichnet,**
daß ein weiterer Temperaturfühler (9) an der der ersten Zone (1) abgewandten Seite der zweiten Zone (2) angeordnet ist.

## Claims

1. Heatable pipette tube, comprising the following features:
- the pipette tube is divided into two zones, namely a first zone (1) in the area of the tip end of the pipette tube and in a second zone (2) following the first zone,
- the second zone (2) has a greater volume than the first zone (1),
- each of the zones (1,2) has its own heating means (4,6) each associated to its own control means (5,7),
- the control means (5) of the heating means (4) associated to the first zone (1) has as strong regulated quantity and the control means (7) of the second zone (2) has a small regulated quantity,
- the electrical heating means (4) of the first zone (1) is a PTC-heating means and
- the heating means (4) of the first zone (1) is contacting the pipette tube of the first zone (1).

2. Pipette tube according to claim 1,
characterized by the tube in the first zone (1) is straight and the tube in the second zone (2) is wounded.

3. Pipette tube according to claims 1 or 2,
characterized by the tube in the area of the second zone (2) is contacting a good heat conducting material (3).

4. Pipette tube according to any of claims 1 to 3,
characterized by a temperature sensor (8) is provided at the side of the tube of the second zone (2) which is facing the first zone (1).

5. Pipette tube according to claim 4,
characterized by another temperature sensor (9) is provided at that side of the second zone (2) which does not face the first zone (1).

## Revendications

1. Tube-pipette chauffant, caractérisé par les particularités suivantes :
- le tube-pipette est divisé en deux parties, à savoir une première partie (1), située dans la zone de la pointe de pipette, et une seconde partie (2) prolongeant la première,
- la seconde partie (2) a un plus grand volume que la première partie (1),
- chacune des parties (1, 2) comporte son propre moyen de chauffage (4, 6) ayant son propre régulateur (5, 7),
- le régulateur (5) du moyen de chauffage (4) associé à la première partie (1) fonctionne avec une modification de grande amplitude de de la valeur de réglage et le régulateur (7) de la seconde partie (2) fonctionne avec une modification plus faible de la valeur de réglage,
- le moyen de chauffage électrique (4) de la première partie (1) est réalisé sous la forme d'un moyen de chauffage à coefficient positif de température et
- le moyen de chauffage (4) de la première partie (1) prend directement appui sur le tube-pipette de la première partie (1).

2. Tube-pipette selon la revendication 1, caractérisé en ce que le tube s étend d'une manière rectiligne dans la première partie (1) et est enroulé dans la seconde partie (2).

3. Tube-pipette selon la revendication 1 ou 2, caractérisé en ce que, dans la zone de la seconde partie (2), le tube prend appui sur un élément caloporteur (3) qui conduit bien la chaleur.

4. Tube-pipette selon l'une des revendications 1 à 3, caractérisé en ce qu'une sonde pyrométrique (8) est disposée sur le côté du tube de la seconde partie (2) qui est tourné vers la première partie (1).

5. Tube-pipette selon la revendication 4, caractérisé en ce qu'une autre sonde pyrométrique (9) est disposée sur le côté de la seconde partie (2) qui est situé à l'opposé de la première partie (1).
